# EUROPEAN PATENT APPLICATION

(11) **EP 4 842 025 A1**
(43) Date of publication of application: **18.11.2026**
(21) Application number: 24916096.1
(22) Date of filing: 12.01.2024
(51) Int. Cl.: H04W 8/14, H04W 76/15

(54) **COMMUNICATION METHOD AND DEVICE, AND STORAGE MEDIUM**

(71) Applicant: Beijing Xiaomi Mobile Software Co., Ltd., Beijing 100085 (CN)
(72) Inventor: CHENG, Yajun, Beijing 100085 (CN)
(74) Representative: Gunzelmann, Rainer
(86) International application number: PCT/CN2024/072097
(87) International publication number: WO 2025/148032

(57) **Abstract**

The embodiments of the present disclosure relate to the technical field of communications and provide a communication method and device, and a storage medium. The method comprises: a Non-AP MLD determines a first frame, wherein the first frame is used for indicating whether at least one second STA having in-device coexistence activities is present among STAs, said first STAs being attached to the Non-AP MLD and operating in an EMLSR link; the Non-AP MLD sends the first frame. The embodiments of the present disclosure may be used to indicate whether an STA having in-device coexistence activities is present among STAs attached to a Non-AP MLD and operating in an EMLSR link.

## Description

### FIELD

The present disclosure relates to the field of communication technologies, and in particular, to a communication method, a device, and a storage medium.

### BACKGROUND

With the development of wireless communication technologies, the integration level of terminal devices is increasing. A terminal device often supports multiple wireless communication protocols, integrates multiple wireless communication modules, and simultaneously accesses multiple wireless networks, such as wireless local area networks (WLAN), long term evolution (LTE), Bluetooth (BT), and global navigation satellite system (GNSS). Concurrent operation of multiple communication modes may cause mutual interference, resulting in communication failure or performance loss.

In a case that a non-access point multi-link device (Non-AP MLD) supporting multi-link and an access point multi-link device (AP MLD) supporting multi-link operate in an enhanced multi-link single radio (EMLSR) mode, related research on in-device coexistence (IDC) activities will continue.

### SUMMARY

Embodiments of the present disclosure provide a communication method, a device, and a storage medium, which can be used to indicate whether STAs affiliated with a Non-AP MLD and operating on an EMLSR link includes a STA having in-device coexistence activities.

In a first aspect, an embodiment of the present disclosure provides a communication method, including: determining, by a non-access point multi-link device (Non-AP MLD) supporting multi-link, a first frame, in which the first frame is used to indicate whether there is at least one second station device (STA) having in-device coexistence activities in first STAs, and a first STA is affiliated with the Non-AP MLD and operates on an enhanced multi-link single radio (EMLSR) link; and sending, by the Non-AP MLD, the first frame.

In a second aspect, an embodiment of the present disclosure provides a communication method, the method including: receiving, by an access point multi-link device (AP MLD) supporting multi-link, a first frame, in which the first frame is used to indicate whether there is at least one second station device (STA) having in-device coexistence activities in first STAs, and a first STA is affiliated with a non-access point multi-link device (Non-AP MLD) and operates on an enhanced multi-link single radio (EMLSR) link.

In a third aspect, an embodiment of the present disclosure provides an AP, including: a processing module, configured to determine a first frame, in which the first frame is used to indicate whether there is at least one second station device (STA) having in-device coexistence activities in first STAs, and a first STA is affiliated with a non-access point multi-link device (Non-AP MLD) and operates on an enhanced multi-link single radio (EMLSR) link; and a transceiver module, configured to send the first frame.

In a fourth aspect, an embodiment of the present disclosure provides an AP, including: a transceiver module, configured to receive a first frame, in which the first frame is used to indicate whether there is at least one second station device (STA) having in-device coexistence activities in first STAs, and a first STA is affiliated with a non-access point multi-link device (Non-AP MLD) and operates on an enhanced multi-link single radio (EMLSR) link.

In a fifth aspect, an embodiment of the present disclosure provides a Non-AP MLD, including one or more processors, in which the Non-AP MLD is configured to perform the communication method provided in the first aspect of the embodiments of the present disclosure.

In a sixth aspect, an embodiment of the present disclosure provides an AP MLD, including one or more processors, in which the AP MLD is configured to perform the communication method provided in the second aspect of the embodiments of the present disclosure.

In a seventh aspect, an embodiment of the present disclosure provides a storage medium, storing instructions, when the instructions are executed on a communication device, the communication device is caused to perform the communication method provided in the first aspect of the embodiments of the present disclosure.

In an eighth aspect, an embodiment of the present disclosure provides a communication system, the communication system including a Non-AP MLD and an AP MLD, in which the Non-AP MLD is configured to perform the method described in the first aspect, and the AP MLD is configured to perform the method described in the second aspect.

Based on the communication method, the device, and the storage medium provided by the embodiments of the present disclosure, the Non-AP MLD can indicate, via the first frame, whether there is at least one STA having in-device coexistence activities in the affiliated STAs operating on the EMLSR link.

Additional aspects and advantages of the embodiments of the present disclosure will be partially set forth in the following description, which will become apparent from the following description, or be learned through the practice of the present disclosure.

### BRIEF DESCRIPTION OF THE DRAWINGS

In order to more clearly illustrate the technical solutions of the embodiments of the present disclosure, the accompanying drawings required for the description of the embodiments of the present disclosure will be briefly introduced below. Obviously, the drawings in the following description are only some embodiments of the present disclosure. For those of ordinary skill in the art, other drawings can also be obtained based on these drawings without exerting any creative effort.
FIG. 1 is a schematic architectural diagram of a communication system according to an embodiment of the present disclosure.
FIG. 2 is an interactive schematic diagram of a communication method according to an embodiment of the present disclosure.
FIG. 3 is a structural schematic diagram of an enhanced multi-link single radio in-device coexistence activities element according to an embodiment of the present disclosure;
FIG. 4 is a first flow chart of a communication method according to an embodiment of the present disclosure.
FIG. 5 is a second flow chart of a communication method according to an embodiment of the present disclosure.
FIG. 6 is a third flow chart of a communication method according to an embodiment of the present disclosure.
FIG. 7 is a fourth flow chart of a communication method according to an embodiment of the present disclosure.
FIG. 8 is a structural schematic diagram of a Non-AP MLD according to an embodiment of the present disclosure.
FIG. 9 is a structural schematic diagram of an AP MLD according to an embodiment of the present disclosure.
FIG. 10 is a structural schematic diagram of a communication device according to an embodiment of the present disclosure.
FIG. 11 is a structural schematic diagram of a chip according to an embodiment of the present disclosure.

### DETAILED DESCRIPTION

Embodiments of the present disclosure provide a communication method, a device, and a storage medium.

In a first aspect, an embodiment of the present disclosure provides a communication method, the method being performed by a first AP and including: determining, by a non-access point multi-link device (Non-AP MLD) supporting multi-link, a first frame, in which the first frame is used to indicate whether there is at least one second station device (STA) having in-device coexistence activities in first STAs, and a first STA is affiliated with the Non-AP MLD and operates on an enhanced multi-link single radio (EMLSR) link; and sending, by the Non-AP MLD, the first frame.

In the above embodiment, the Non-AP MLD can indicate, via the first frame, whether there is at least one affiliated STA having in-device coexistence activities in the affiliated STAs operating on the EMLSR link, which facilitates communication between the AP MLD and the Non-AP MLD based on the in-device coexistence activities situation of the affiliated STAs of the Non-AP MLD, thereby avoiding communication failure and communication interference, and improving communication efficiency.

In some embodiments of the first aspect, the first frame includes a first information field, a first value in the first information field indicates that there is the at least one second STA in the first STAs, and a second value in the first information field indicates that there is no second STA in the first STAs, in which the first frame includes an enhanced multi-link control field, and the enhanced multi-link control field includes the first information field.

In the above embodiment, the first frame can indicate, via different identification values of the first information field, whether there is at least one STA having in-device coexistence activities in the STAs affiliated with the Non-AP MLD and operating on the EMLSR link, which facilitates the AP MLD to quickly determine whether there is at least one STA having in-device coexistence activities in the STAs affiliated with the Non-AP MLD and operating on the EMLSR link.

In some embodiments of the first aspect, in a case that there is the at least one second STA in the first STAs, the first frame further includes at least one second information field, and a second information field corresponds to a second STA. The second information field includes at least one of: a first sub-information field, in which the first sub-information field is used to indicate a link identifier of an EMLSR link on which the second STA operates; or at least one second sub-information field, in which a second sub-information field is used to indicate activity information of in-device coexistence activities present in the second STA.

In the above embodiment, the first frame can indicate, via a plurality of second information fields, the link identifier of the EMLSR link on which a second STA operates and the activity information of the in-device coexistence activities present in the second STA, which facilitates the AP MLD to quickly determine the second STA having in-device coexistence activities and quickly determine the activity information of in-device coexistence activities present in the second STA.

In some embodiments of the first aspect, the second sub-information field includes at least one of: a first identifier field, in which the first identifier field is used to indicate an index of the in-device coexistence activities; a second identifier field, in which the second identifier field is used to indicate a start time of the in-device coexistence activities; or a third identifier field, in which the third identifier field is used to indicate a duration of the in-device coexistence activities.

In the above embodiment, the first frame can indicate, via a second sub-information field, an index, a start time, and a duration of in-device coexistence activities present in a second STA, which facilitates the AP MLD to quickly determine the in-device coexistence activities present in the second STA and the time information of the in-device coexistence activities present.

In some embodiments of the first aspect, the method further includes: receiving, by the Non-AP MLD, a second frame, in which the second frame is used to respond to the first frame.

In the above embodiment, the AP MLD can respond to the first frame via the second frame to confirm that the AP MLD has acknowledged the information indicated by the first frame, which helps improve the indication process of the first frame.

In some embodiments of the first aspect, in a case that there is the at least one second STA in the first STAs, the receiving, by the Non-AP MLD, the second frame includes at least one of: receiving, by the Non-AP MLD, the second frame via a third STA outside a first time interval of the third STA, in which the third STA is any one of the at least one second STA, and the first time interval is an activity time of the in-device coexistence activities present in the third STA; or receiving, by the Non-AP MLD, the second frame via a fourth STA, in which the fourth STA is any STA in the first STAs other than the at least one second STA; and in a case that there is no second STA in the first STAs, the receiving, by the Non-AP MLD, the second frame includes: receiving, by the Non-AP MLD, the second frame via any one of the first STAs.

In the above embodiment, in a case that there is at least one STA having in-device coexistence activities in the STAs affiliated with the Non-AP MLD and operating on the EMLSR link, the Non-AP MLD receives the second frame via the STA outside the in-device coexistence activity time of a STA that has the in-device coexistence activities and operates on the EMLSR link, or can receive the second frame via the STA that does not have the in-device coexistence activities and operates on the EMLSR link, thereby avoiding interference between the transmission of the second frame and the in-device coexistence activities of the affiliated STAs of the Non-AP MLD, reducing the risk of communication failure, and improving the transmission reliability and transmission efficiency of the second frame.

In some embodiments of the first aspect, the method further includes: receiving, by the Non-AP MLD, an initial control frame, in which the initial control frame is used to indicate that data transmission is to be performed with the Non-AP MLD.

In some embodiments of the first aspect, in a case that there is the at least one second STA in the first STAs, the receiving, by the Non-AP MLD, the initial control frame includes at least one of: receiving, by the Non-AP MLD, the initial control frame via a third STA outside a first time interval of the third STA, in which the third STA is any one of the at least one second STA, and the first time interval is an activity time of the in-device coexistence activities present in the third STA; or receiving, by the Non-AP MLD, the initial control frame via a fourth STA, in which the fourth STA is any STA in the first STAs other than the at least one second STAs; and in a case that there is no second STA in the first STAs, the receiving, by the Non-AP MLD, the initial control frame includes: receiving, by the Non-AP MLD, the initial control frame via any one of the first STAs.

In the above embodiment, in a case that there is at least one STA having in-device coexistence activities in the STAs affiliated with the Non-AP MLD and operating on the EMLSR link, the Non-AP MLD receives the initial control frame via the STA outside the in-device coexistence activity time of a STA that has the in-device coexistence activities and operates on the EMLSR link, or can receive the initial control frame via the STA that does not have the in-device coexistence activities and operates on the EMLSR link, thereby avoiding interference between the transmission of the initial control frame and the in-device coexistence activities of the affiliated STAs of the Non-AP MLD, reducing the risk of communication failure, and improving the transmission reliability and transmission efficiency of the initial control frame, which further helps improve the data transmission efficiency between the Non-AP MLD and the AP MLD.

In a second aspect, an embodiment of the present disclosure provides a communication method, the method being performed by a second AP and including: receiving, by an access point multi-link device (AP MLD) supporting multi-link, a first frame, in which the first frame is used to indicate whether there is at least one second station device (STA) having in-device coexistence activities in first STAs, and a first STA is affiliated with a non-access point multi-link device (Non-AP MLD) and operates on an enhanced multi-link single radio (EMLSR) link.

In the above embodiment, the AP MLD can determine, based on the first frame, the in-device coexistence activities situation of the affiliated STAs of the Non-AP MLD, and communicate with the Non-AP MLD based on the situation, thereby avoiding communication failure and communication interference, and improving communication efficiency.

In some embodiments of the second aspect, the first frame includes a first information field, a first value in the first information field indicates that there is the at least one second STA in the first STAs, and a second value in the first information field indicates that there is no second STA in the first STAs, in which the first frame includes an enhanced multi-link control field, and the enhanced multi-link control field includes the first information field.

In the above embodiment, the AP MLD can quickly determine, via the first frame, whether there is at least one STA having in-device coexistence activities in the STAs affiliated with the Non-AP MLD and operating on the EMLSR link, thereby facilitating the AP MLD to communicate with the Non-AP MLD based on the at least one STA, and improving communication efficiency.

In some embodiments of the second aspect, in a case that there is the at least one second STA in the first STAs, the first frame further includes at least one second information field, and a second information field corresponds to a second STA, in which the second information field includes at least one of: a first sub-information field, in which the first sub-information field is used to indicate a link identifier of an EMLSR link on which the second STA operates; or at least one second sub-information field, a second sub-information field is used to indicate activity information of in-device coexistence activities present in the second STA.

In the above embodiment, the AP MLD can quickly determine, based on the first frame, the second STA having in-device coexistence activities in the first STAs of the Non-AP MLD and quickly determine the activity information of the in-device coexistence activities present in the second STA, thereby facilitating the AP MLD to communicate with the Non-AP MLD based on the activity information, and improving communication efficiency.

In some embodiments of the second aspect, the second sub-information field includes at least one of: a first identifier field, in which the first identifier field is used to indicate an index of the in-device coexistence activities; a second identifier field, in which the second identifier field is used to indicate a start time of the in-device coexistence activities; or a third identifier field, in which the third identifier field is used to indicate a duration of the in-device coexistence activities.

In the above embodiment, the first frame can indicate, via a second sub-information field, an index, a start time, and a duration of in-device coexistence activities present in a second STA, which facilitates the AP MLD to quickly determine the in-device coexistence activities present in the second STA and the time information of the in-device coexistence activities present.

In some embodiments of the second aspect, the method further includes: sending, by the AP MLD, a second frame, in which the second frame is used to respond to the first frame.

In the above embodiment, the AP MLD can respond to the first frame via the second frame to confirm that the AP MLD has acknowledged the information indicated by the first frame, which helps improve the indication process of the first frame.

In some embodiments of the second aspect, in a case that there is the at least one second STA in the first STAs, the sending, by the AP MLD, the second frame includes at least one of: sending, by the AP MLD, the second frame to a third STA outside a first time interval of the third STA, in which the third STA is any one of the at least one second STA, and the first time interval is an activity time of the in-device coexistence activities present in the third STA; and sending, by the AP MLD, the second frame to a fourth STA, in which the fourth STA is any STA in the first STAs other than the at least one second STA; or in a case that there is no second STA in the first STAs, the sending, by the AP MLD, the second frame includes: sending, by the AP MLD, the second frame to any one of the first STAs.

In the above embodiment, in a case that there is at least one STA having in-device coexistence activities in the STAs affiliated with the Non-AP MLD and operating on the EMLSR link, the AP MLD can send the second frame to the affiliated STA that has the in-device coexistence activities and operates on the EMLSR link of the Non-AP MLD outside the in-device coexistence activity time of the affiliated STA, thereby avoiding interference between the transmission of the second frame and the in-device coexistence activities of the affiliated STAs of the Non-AP MLD, reducing the risk of communication failure, and improving the transmission reliability and transmission efficiency of the second frame.

In some embodiments of the second aspect, the method further includes: sending, by the AP MLD, an initial control frame, in which the initial control frame is used to indicate that data transmission is to be performed with the Non-AP MLD.

In some embodiments of the second aspect, in a case that there is the at least one second STA in the first STAs, the sending, by the AP MLD, the initial control frame includes at least one of: sending, by the AP MLD, the initial control frame to a third STA outside a first time interval of the third STA, in which the third STA is any one of the at least one second STA, and the first time interval is an activity time of the in-device coexistence activities present in the third STA; and sending, by the AP MLD, the initial control frame to a fourth STA, in which the fourth STA is any STA in the first STAs other than the at least one second STAs; or in a case that there is no second STA in the first STAs, the sending, by the AP MLD, the initial control frame includes: sending, by the AP MLD, the initial control frame to any one of the first STAs.

In the above embodiment, in a case that there is at least one STA having in-device coexistence activities in the STAs affiliated with the Non-AP MLD and operating on the EMLSR link, the AP MLD can send the initial control frame to the affiliated STA that has the in-device coexistence activities and operates on the EMLSR link of the Non-AP MLD outside the in-device coexistence activity time of the affiliated STA, thereby avoiding interference between the transmission of the initial control frame and the in-device coexistence activities of the affiliated STAs of the Non-AP MLD, reducing the risk of communication failure, and improving the transmission reliability and transmission efficiency of the initial control frame.

In a third aspect, an embodiment of the present disclosure provides a Non-AP MLD, including: a processing module, configured to determine a first frame, in which the first frame is used to indicate whether there is at least one second station device (STA) having in-device coexistence activities in first STAs, and a first STA is affiliated with a non-access point multi-link device (Non-AP MLD) and operates on an enhanced multi-link single radio (EMLSR) link; and
a transceiver module, configured to send the first frame.

In a fourth aspect, an embodiment of the present disclosure provides an AP MLD, including: a transceiver module, configured to receive a first frame, in which the first frame is used to indicate whether there is at least one second station device (STA) having in-device coexistence activities in first STAs, and a first STA is affiliated with a non-access point multi-link device (Non-AP MLD) and operates on an enhanced multi-link single radio (EMLSR) link.

In a fifth aspect, an embodiment of the present disclosure provides a Non-AP MLD, including one or more processors, in which the Non-AP MLD is configured to perform the communication method provided in the first aspect and optional implementations of the first aspect.

In a sixth aspect, an embodiment of the present disclosure provides an AP MLD, including one or more processors, in which the AP MLD is configured to perform the communication method provided in the second aspect and optional implementations of the second aspect.

In a seventh aspect, an embodiment of the present disclosure provides a communication device, including one or more processors, in which the communication device can serve as the Non-AP MLD to perform the communication method provided in the first aspect and optional implementations of the first aspect, or serve as the AP MLD to perform the communication method provided in the second aspect and optional implementations of the second aspect.

In an eighth aspect, an embodiment of the present disclosure provides a storage medium, the storage medium storing instructions, when the instructions are executed on a communication device, the communication device is caused to perform the methods described in the first aspect, the second aspect, the optional implementations of the first aspect, and the optional implementations of the second aspect.

In a ninth aspect, an embodiment of the present disclosure provides a program product, when the program product is executed by a communication device, the communication device is caused to perform the methods described in the first aspect, the second aspect, the optional implementations of the first aspect, and the optional implementations of the second aspect.

In a tenth aspect, an embodiment of the present disclosure provides a computer program, that, when running on a computer, the computer is caused to perform the methods described in the first aspect, the second aspect, the optional implementations of the first aspect, and the optional implementations of the second aspect.

In an eleventh aspect, an embodiment of the present disclosure provides a chip or a chip system. The chip or the chip system including a processing circuit, configured to perform the methods described in the first aspect, the second aspect, the optional implementations of the first aspect, and the optional implementations of the second aspect.

In a twelfth aspect, an embodiment of the present disclosure provides a communication system, the communication system including a Non-AP MLD and an AP MLD, in which the Non-AP MLD is configured to perform the methods described in the first aspect and the optional implementations of the first aspect, and the AP MLD is configured to perform the methods described in the second aspect and the optional implementations of the second aspect.

It can be understood that the above Non-AP MLD, AP MLD, communication system, communication device, storage medium, program product, computer program, chip or chip system are all used to perform the methods disclosed by the embodiments of the present disclosure. Therefore, the beneficial effects that can be achieved can refer to the beneficial effects in the corresponding methods, and will not be repeated here.

Embodiments of the present disclosure provide a communication method, a device, and a storage medium. In some embodiments, terms such as the terms "communication method", "information processing method", and "communication method" are synonymous and are used interchangeably, terms such as "communication device" and "information processing device" are synonymous and are used interchangeably, and terms such as "information processing system" and "communication system" are synonymous and are used interchangeably.

The embodiments of the present disclosure are not exhaustive, but are only illustrations of some embodiments, and are not intended as specific limitations on the protection scope of the present disclosure. In the absence of contradiction, each step in a certain embodiment can be implemented as an independent embodiment, and the steps can be arbitrarily combined. For example, a solution after removing some steps in a certain embodiment can also be implemented as an independent embodiment, and the order of the steps in a certain embodiment can be arbitrarily exchanged. In addition, the optional implementations in a certain embodiment can be arbitrarily combined. In addition, the embodiments can be arbitrarily combined. For example, some or all steps of different embodiments can be arbitrarily combined, and a certain embodiment can be arbitrarily combined with the optional implementations of other embodiments.

In the various embodiments of the present disclosure, if there are no special explanation and logical conflict, the terms and/or descriptions between the embodiments are consistent and can be referenced to each other, and the technical features in different embodiments can be combined to form new embodiments according to their inherent logical relationships.

The terms used in the embodiments of the present disclosure are only for the purpose of describing specific embodiments, and are not intended as limitations to the present disclosure.

In the embodiments of the present disclosure, unless otherwise stated, elements expressed in singular form, such as "a", "an", "the", "above", "above-mentioned", "aforementioned", "this", etc., can mean "one and only one", or "one or more", "at least one", etc. For example, when articles such as "a", "an", "the" are used in English translation, the noun following the article can be understood either a singular expression or a plural expression.

In the embodiments of the present disclosure, "a plurality of" means two or more.

In some embodiments, terms such as "at least one of", "one or more", "a plurality of", "multiple", etc., are synonymous and are used interchangeably.

In some embodiments, the descriptions such as "at least one of A and B", "A and/or B", "in one case A, in another case B", "in response to one case A, in response to another case B", etc., can include the following technical solutions according to situations: in some embodiments A (A is performed independently of B); in some embodiments B (B is performed independently of A); in some embodiments, selecting and performing from A and B (A and B are selectively performed); in some embodiments A and B (both A and B are performed). The same applies when there are more branches such as A, B, C, etc.

In some embodiments, the descriptions such as "A or B", etc., can include the following technical solutions according to situations: in some embodiments A (A is performed independently of B); in some embodiments B (B is performed independently of A); in some embodiments, selecting and performing from A and B (A and B are selectively performed). The same applies when there are more branches such as A, B, C, etc.

The prefixes such as "first", "second", etc. in the embodiments of the present disclosure are only used to distinguish different described objects, and do not limit on the position, order, priority, quantity, or content of the described objects. The statements of the described objects refer to the descriptions in the context of the claims or embodiments, and no additional limitations should be implied due to the use of the prefixes. For example, if the described object is a "field", the ordinal numbers before "field" in "first field" and "second field" do not limit the position or order between the "fields", "first" and "second" do not limit whether the "fields" modified by them are in the same message, nor do they limit the order of the "first field" and the "second field". For another example, if the described object is a "level", the ordinal numbers before "level" in "first level" and "second level" do not limit the priority between the "levels". For another example, the number of the described object is not limited by the ordinal numbers, and can be one or more. Taking "first device" In an embodiment, the number of "devices" can be one or more. In addition, the objects modified by different prefixes can be the same or different. For example, if the described object is a "device", the "first device" and the "second device" can be the same device or different devices, and their types can be the same or different; for another example, if the described object is "information", the "first information" and the "second information" can be the same information or different information, and their content can be the same or different.

In some embodiments, "comprising A", "containing A", "used to indicate A", "carrying A" can be interpreted as directly carrying A, or indirectly indicating A.

In some embodiments, terms such as "in response to...", "in response to determining...", "in a case that...", "at...", "when...", "if...", etc. are synonymous and are used interchangeably.

In some embodiments, terms such as "greater than", "greater than or equal to", "not less than", "more than", "more than or equal to", "not less than", "higher than", "higher than or equal to", "not lower than", "above" are synonymous and are used interchangeably, and terms such as "less than", "less than or equal to", "not greater than", "less than", "less than or equal to", "not more than", "lower than", "lower than or equal to", "not higher than", "below" are synonymous and are used interchangeably.

In some embodiments, the acquisition of data, information, etc. can comply with the laws and regulations of the country where the user is located.

In some embodiments, data, information, etc. can be acquired after obtaining user consent.

In addition, each element, each row, or each column in the tables of the embodiments of the present disclosure can be implemented as an independent embodiment, and any combination of elements, rows, or columns can also be implemented as an independent embodiment.

With the development of wireless communication technologies, the integration level of terminal devices is increasing. A terminal device often supports multiple wireless communication protocols, integrates multiple wireless communication modules, and simultaneously accesses multiple wireless networks, such as WLAN, LTE, BT, and GNSS. Concurrent communication using multiple protocols may cause mutual interference, resulting in communication failure or performance loss. When the communication frequency bands of different communication systems are adjacent, a sending operation of one communication system will cause interference to a receiving operation of another system. For example, Wi-Fi is adjacent to frequency bands such as LTE Band 40 and LTE Band 7. When the frequency component falls into the working frequency band of the adjacent channel, it will cause communication interference to the adjacent channel. In addition, in a case that multiple wireless communication modules coexist, the physical spacing of the RF modules of each communication module is relatively small. When working simultaneously, there is mutual interference between the communications of the communication systems, affecting the transmission and reception of each communication module. Both Wi-Fi and BT operate in the 2.4 GHz frequency band, and in most communication devices, the Wi-Fi module and the BT module share a common antenna. Therefore, there is mutual interference and conflict between Wi-Fi and BT whether within a single node or between multiple nodes. Moreover, with the increase in bandwidth of wireless communication systems and the continuous enrichment of bandwidth, the problem of in-device interference among multiple wireless communications becomes increasingly serious, and the reliability of data transmission between devices is reduced.

When the Non-AP MLD enables an enhanced multi-link single radio (EMLSR) link, the STA operating on the EMLSR link and affiliated with the Non-AP MLD enters a listening operation and a mode of receiving an initial control frame sent by the AP MLD. When the STA, operating on the EMLSR link and affiliated with the Non-AP MLD, has in-device coexistence activities, such as P2P communication or BT communication, it may cause failure of EMLSR operation mode enablement or prevent the STA from receiving the initial control frame sent by the AP MLD, resulting in communication interruption or data packet loss.

To solve the above problem, the technical solutions in the embodiments of the present disclosure will be described more clearly and completely below in conjunction with the accompanying drawings. Obviously, the described embodiments are only part of the embodiments of the present disclosure, not all of the embodiments. Based on the embodiments in the present disclosure, all other embodiments obtained by those of ordinary skill in the art without inventive effort fall within the protection scope of the present disclosure.

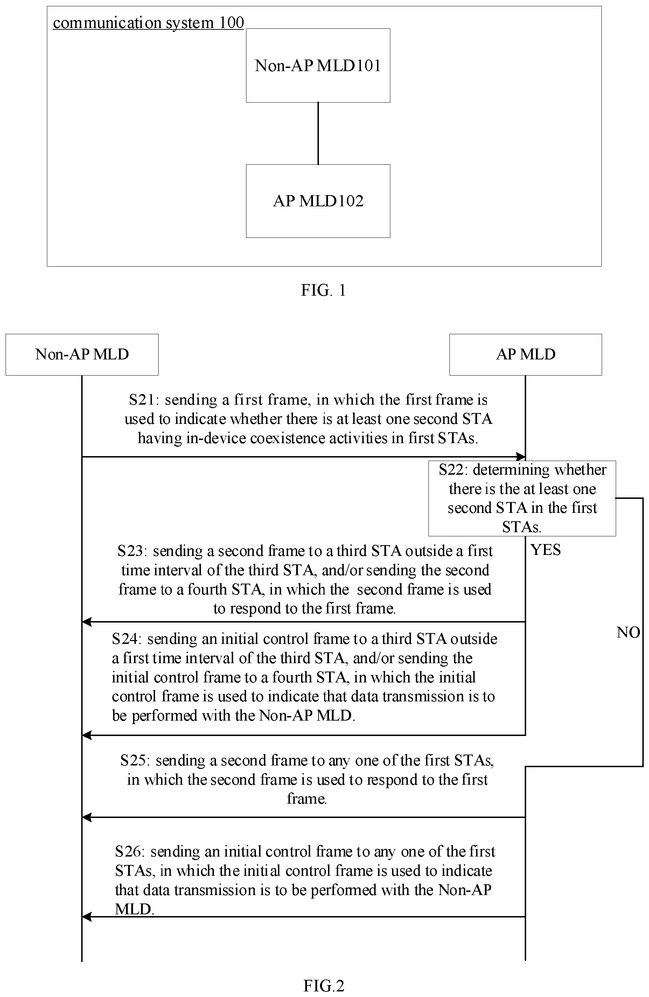

FIG. 1 is a schematic architectural diagram of a communication system according to an embodiment of the present disclosure.

As shown in FIG. 1, a communication system 100 includes a Non-AP MLD 101 and an AP MLD 102.

The Non-AP MLD 101 and the AP MLD 102 are devices supporting multi-link operation (MLO) technology.

In some embodiments, the Non-AP MLD 101 and the AP MLD 102 can be terminal devices or network devices with a wireless fidelity chip.

It can be understood that the communication system described in the embodiments of the present disclosure is provided to more clearly illustrate the technical solutions of the embodiments of the present disclosure, and does not constitute a limitation on the technical solutions disclosed by the embodiments of the present disclosure. Those of ordinary skill in the art will appreciate that, with the evolution of system architectures and the emergence of new service scenarios, the technical solutions disclosed by the embodiments of the present disclosure are also applicable to similar technical problems.

The following embodiments of the present disclosure can be applied to the communication system 100 shown in FIG. 1, or part of the subjects, but are not limited thereto. The subjects shown in FIG. 1 are illustrative, and the communication system can include all or part of the subjects in FIG. 1, or can include other subjects besides FIG. 1. The number and form of the subjects are arbitrary, and the subjects can be physical or virtual. The link relationships between the subjects are illustrative, the subjects may not be linked or may be linked, and the link may be in any manner, including direct or indirect, and wired or wireless.

The embodiments of the present disclosure can be applied to wireless local area networks (WLAN), e.g., IEEE 802.11 system standards, such as a 802.11a/b/g standard, a 802.11n standard, a 802.11ac standard, a 802.11ax standard, a 802.11bf, a 802.11be standard, or next generations thereof, such as 802.11bn. Alternatively, the embodiments of the present disclosure may also be applicable to wireless local area network systems such as internet of things (IoT) networks or vehicle-to-x (V2X) networks. The embodiments of the present disclosure may also be applicable to other possible communication systems, for example, long term evolution (LTE) system, LTE frequency division duplex (FDD) system, LTE time division duplex (TDD), universal mobile telecommunication system (UMTS), worldwide Interoperability for microwave access (WiMAX) communication system, and future 5th generation (5G) communication system, etc.

FIG. 2 is an interactive schematic diagram of a communication method according to an embodiment of the present disclosure. The communication method shown in FIG. 2 includes following steps.

S21, a Non-AP MLD sends a first frame, in which the first frame is used to indicate whether there is at least one second STA having in-device coexistence activities in first STAs.

In some embodiments, a first STA is affiliated with the Non-AP MLD and operates on an EMLSR link. That is, the first STA is an affiliated STA that operates on the EMLSR link among the affiliated STAs of the Non-AP MLD.

In some embodiments, a second STA is a STA that has in-device coexistence activities among the STAs affiliated with the Non-AP MLD and operating on the EMLSR link.

In some embodiments, the first frame can be an enhanced multi-link operating mode notification (EML Operating Mode Notification) frame.

In some embodiments, the first frame includes a first information field, a first value in the first information field indicates that there is the at least one second STA in the first STAs, and a second value in the first information field indicates that there is no second STA in the first STAs.

The first value and the second value are different values. For example, the first value can be 1, and the second value can be 0, which is not limited herein.

In an embodiment, in a case the identification value of the first information field is 1, the first frame is used to indicate that there is the at least one second STA in the first STAs; in a case the identification value of the first information field is 0, the first frame is used to indicate that there is no second STA in the first STAs.

In some embodiments, the first information field can be an in-device coexistence activities field.

In some embodiments, the first frame includes an enhanced multi-link control (EML Control) field, and the enhanced multi-link control field includes the first information field.

In an embodiment, the first frame is an EML operating mode notification frame, the EML operating mode notification frame includes an EML control field, the EML control field includes an in-device coexistence activities field; when the identification value of the in-device coexistence activities field is a first value, the first frame is used to indicate that there is the at least one second STA in the first STAs; when the identification value of the in-device coexistence activities field is a second value, the first frame is used to indicate that there is no second STA in the first STAs.

In some embodiments, in a case that there is the at least one second STA in the first STAs, the first frame further includes at least one second information field, and a second information field corresponds to a second STA.

Optionally, the second information field can be a per-link in-device coexistence (IDC) activities field.

The second information field includes at least one of: a first sub-information field, in which the first sub-information field is used to indicate a link identifier of an EMLSR link on which the second STA operates; or at least one second sub-information field, in which a second sub-information field is used to indicate activity information of in-device coexistence activities present in the second STA.

In an embodiment, in a case the first frame is used to indicate that there is the at least one second STA in the first STAs, or a first value of the first information field in the first frame indicates that there is the at least one second STA in the first STAs, the first frame can further comprise at least one second information field.

Specifically, in a case where the second information field includes a first sub-information field, the first sub-information field indicates a link identifier (Link ID), and the communication link corresponding to the link identifier is an EMLSR link on which a second STA operates.

The link identifier indicated by a first sub-information field in the second information field is different.

Optionally, the first sub-information field in the second information field can be a Link ID field.

Specifically, in a case the second information field includes at least one second sub-information field, a second sub-information field is used to indicate activity information of in-device coexistence activities present in the second STA.

A second sub-information field in the second information field is used to indicate activity information of different in-device coexistence activities of the second STA.

Optionally, the second sub-information field in the second information field can be a per-IDC activities field.

In an embodiment, the second STAs present in the first STAs are STA1 and STA2, and the first frame includes a second information field corresponding to STA1 and a second information field corresponding to STA2.

The second information field corresponding to STA1 includes a first sub-information field and at least one second sub-information field. The first sub-information field in the second information field corresponding to STA1 is used to indicate the link identifier of the EMLSR link on which STA1 operates, and a second sub-information field in the second information field corresponding to STA1 is used to indicate activity information of in-device coexistence activities present in STA1. The first sub-information field in the second information field corresponding to STA2 is used to indicate the link identifier of the EMLSR link on which STA2 operates, and the second sub-information field in the second information field corresponding to STA2 is used to indicate activity information of in-device coexistence activities present in STA2.

In-device coexistence activities present in a second STA can be a communication activity of the second STA in a communication system.

In some embodiments, in a case that there is the at least one second STA in the first STAs and the second information field in the first frame includes at least one second sub-information field, the second sub-information field further includes at least one of: a first identifier field, in which the first identifier field is used to indicate an index of the in-device coexistence activities; a second identifier field, in which the second identifier field is used to indicate a start time of the in-device coexistence activities; or a third identifier field, in which the third identifier field is used to indicate a duration of the in-device coexistence activities.

The first identifier field is used to indicate an index of the in-device coexistence activities corresponding to the second sub-information field where the first identifier field is located. That is, the first identifier field is used to identify the in-device coexistence activities corresponding to the second sub-information field where the first identifier field is located.

The first identifier field can be an IDC activities index field.

The second identifier field is used to indicate an activity start time of the in-device coexistence activities corresponding to the second sub-information field where the second identifier field is located.

The second identifier field can be an IDC activity start time field.

The third identifier field is used to indicate an activity duration of the in-device coexistence activities corresponding to the second sub-information field where the third identifier field is located.

The third identifier field can be an IDC activity duration field.

In some embodiments, in a case that there is the at least one second STA in the first STAs, the first frame includes a first element, for example, an EMLSR IDC activities element, and the EMLSR IDC activities element includes at least one second information field, and a second information field corresponds to a second STA.

In an embodiment, the first frame includes an EML control field. The EML control field includes an in-device coexistence activities field (i.e., the first information field). When the identification value of the in-device coexistence activities field is 1, the first frame is used to indicate that there is the at least one second STA in the first STAs; when the identification value of the in-device coexistence activities field is a second value, the first frame is used to indicate that there is no second STA in the first STAs.

When the identification value of the in-device coexistence activities field is the first value, the first frame includes an EMLSR IDC activities element. As shown in the frame format of the first frame in the following table, the first element serves as an optional element. When the identification value of the in-device coexistence activities field is the first value, the first frame includes the first element, and for example, includes the EMLSR IDC activities element.

| Order | Information |
|---|---|
| 1 | Category |
| 2 | Protected EHT Action |
| ... | .... |
| 5 | EMLSR Parameter Update |
| 6 | First Element(Optional) |

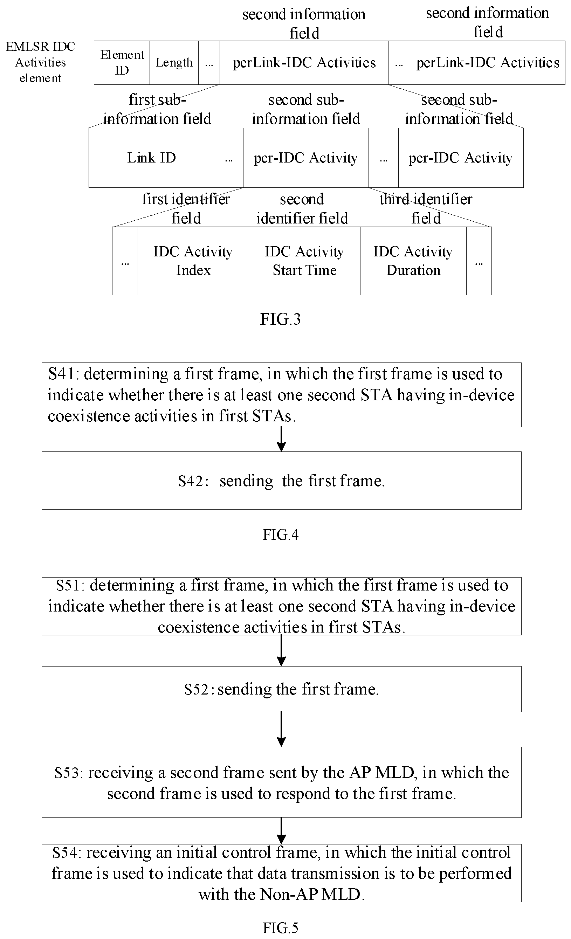

In combination with FIG. 3, the EMLSR IDC activities element includes at least one per-link IDC activities field (i.e., the second information field).

A per-link-IDC activities field includes a link identifier (Link ID) field (i.e., the first sub-information field) and at least one per-IDC activities field (i.e., the second sub-information field).

The link ID field is used to indicate a link ID, and the communication link corresponding to the link identifier is an EMLSR link on which a second STA operates.

A per-IDC activities field is used to indicate activity information of in-device coexistence activities present in the second STA operating on the EMLSR link identified by the link ID field.

A per-IDC activities field includes an IDC activities index field (i.e., the first identifier field), an IDC activity start time field (i.e., the second identifier field), and an IDC activity duration field (i.e., the third identifier field).

The IDC activities index field is used to indicate an index of the in-device coexistence activities, the IDC activity start time field is used to indicate a start time of the in-device coexistence activities, and the IDC activity duration field is used to indicate a duration of the in-device coexistence activities.

S22, the AP MLD determines whether there is the at least one second STA in the first STAs.

In some embodiments, after receiving the first frame, the AP MLD can directly determine, based on the first frame, whether there is the at least one second STA in the first STAs. If there is the at least one second STA in the first STAs, step S24 is performed; if there is no second STA in the first STAs, step S26 is performed.

S23, the AP MLD sends a second frame to a third STA outside a first time interval of the third STA, and/or sends the second frame to a fourth STA. The second frame is used to respond to the first frame.

In some embodiments, after the AP MLD receives the second frame sent by the Non-AP MLD, in a case that the AP MLD is ready to communicate with the Non-AP MLD in the EMLSR state, when there is the at least one second STA in the first STAs, the AP MLD does not send the second frame to any second STA that is in the in-device coexistence activities. Meanwhile, the AP MLD sends the second frame to the third STA outside the first time interval of the third STA, and/or sends the second frame to the fourth STA to respond to the first frame via the second frame.

The third STA is any one of the at least one second STA, and a first time interval of the third STA is an activity time of the in-device coexistence activities present in the third STA.

A first time interval of the third STA is determined by the start time of the in-device coexistence activities indicated by the second identifier field included in a second sub-information field of the second information field corresponding to the third STA in the first frame, and the duration of the in-device coexistence activities indicated by the third identifier field.

In an embodiment, the first frame includes a second information field corresponding to the third STA, the second information field corresponding to the third STA includes at least one second sub-information field, and the activity time of the in-device coexistence activities present in the third STA, that is, a first time interval of the third STA, can be determined via the second identifier field and the third identifier field in the second sub-information field.

In an embodiment, the second STAs present in the first STAs are STA3 and STA4. When an AP MLD sends the second frame to STA3, the AP MLD needs to send the second frame to STA3 outside the first time interval of STA3; when the AP MLD sends the second frame to STA4, the AP MLD needs to send the second frame to STA4 outside the first time interval of STA4.

The fourth STA is any STA in the first STAs other than the at least one second STA, that is, the fourth STA is any STA that does not have the in-device coexistence activities among the STAs affiliated with the Non-AP MLD and operating on the EMLSR link.

In an embodiment, the first STAs are STA5, STA6, and STA7, where STA5 and STA6 have the in-device coexistence activities, and STA7 does not have the in-device coexistence activities. In this case, the AP MLD can send the second frame to STA7 at any time.

In some embodiments, the second frame sent by the AP MLD can be an enhanced multi-link (EML) operating mode notification frame.

In some embodiments, the second frame sent by the AP MLD may not include any second information fields.

The first information field in the second frame is a reserved bit. When the second frame sent by the AP MLD includes an EML control field, the in-device coexistence activities field in the EML control field is a reserved bit.

It should be particularly noted that, when the AP MLD sends the second frame to the third STA, the AP MLD sends the second frame to the third STA via an affiliated AP that operates on a same communication link as the third STA and is associated with the third STA. When the AP MLD sends the second frame to the fourth STA, the AP MLD sends the second frame to the fourth STA via an affiliated AP that operates on a same communication link as the fourth STA and is associated with the fourth STA.

S24: the AP MLD sends an initial control frame to a third STA outside a first time interval of the third STA, and/or sends the initial control frame to a fourth STA. The initial control frame is used to indicate that data transmission is to be performed with the Non-AP MLD.

In some embodiments, in a case that there is the at least one second STA in the first STAs, when the AP MLD needs to perform data transmission with the Non-AP MLD, the AP MLD can send the initial control frame to the Non-AP MLD.

The initial control frame is used to indicate that data transmission is to be performed with the Non-AP MLD.

Specifically, in a case that there is the at least one second STA in the first STAs, the manner in which the AP MLD sends the initial control frame is the same as the manner in which the AP MLD sends the second frame.

That is, in a case that there is the at least one second STA in the first STAs, the AP MLD does not send the initial control frame to any second STA that is in the in-device coexistence activities.

Optionally, in a case that there is the at least one second STA in the first STAs, the AP MLD sends the initial control frame to a third STA outside a first time interval of the third STA.

The third STA is any one of the at least one second STA, and the first time interval of the third STA is an activity time of the in-device coexistence activities present in the third STA.

A first time interval of the third STA is determined by the start time of the in-device coexistence activities indicated by the second identifier field included in a second sub-information field of the second information field corresponding to the third STA in the first frame, and the duration of the in-device coexistence activities indicated by the third identifier field.

In an embodiment, the first frame includes the second information field corresponding to the third STA. The second information field corresponding to the third STA includes at least one second sub-information field, and the activity time of the in-device coexistence activities present in the third STA, that is, the first time interval of the third STA, can be determined via the second identifier field and the third identifier field in the second sub-information field.

In an embodiment, the second STAs present in the first STAs are STA8 and STA9. When the AP MLD sends the initial control frame to STA8, the AP MLD needs to send the initial control frame to STA8 outside the first time interval of STA8; when the AP MLD sends the initial control frame to STA9, the AP MLD needs to send the initial control frame to STA9 outside the first time interval of STA9.

Optionally, in a case that there is the at least one second STA in the first STAs, the AP MLD can send the initial control frame to a fourth STA.

The fourth STA is any STA in the first STAs other than the at least one second STA, that is, the fourth STA is any STA that does not have the in-device coexistence activities among the STAs affiliated with the Non-AP MLD and operating on the EMLSR link.

In an embodiment, the first STAs are STA10, STA11, and STA12, where STA10 and STA11 have the in-device coexistence activities, and STA12 does not have the in-device coexistence activities. In this case, the AP MLD can send the initial control frame to STA12 at any time.

It should be particularly noted that, when the AP MLD sends the initial control frame to the third STA, the AP MLD sends the initial control frame to the third STA via an affiliated AP that operates on the same communication link as the third STA and is associated with the third STA. When the AP MLD sends the initial control frame to the fourth STA, the AP MLD sends the initial control frame to the fourth STA via an affiliated AP that operates on the same communication link as the fourth STA and is associated with the fourth STA.

In some embodiments, the initial control frame can be a multi-user request to send (MU-RTS) trigger frame or a buffer status report poll (BSRP) trigger frame.

S25: the AP MLD sends a second frame to any one of the first STAs, in which the second frame is used to respond to the first frame.

In some embodiments, in a case that the AP MLD determines that there is no second STA in the first STAs, it also needs to send the second frame to the Non-AP MLD to respond to the first frame.

Specifically, in a case that there is no second STA in the first STAs, the AP MLD can send the second frame to any one of the first STAs.

It should be particularly noted that, when the AP MLD sends the second frame to any one of the first STAs, the AP MLD sends the second frame to the first STA via an affiliated AP that operates on the same communication link as the first STA and is associated with the first STA.

S26: the AP MLD sends an initial control frame to any one of the first STAs, in which the initial control frame is used to indicate that data transmission is to be performed with the Non-AP MLD.

In some embodiments, in a case that the AP MLD determines that there is no second STA in the first STAs, when the AP MLD needs to perform data transmission with the Non-AP MLD, the AP MLD can send the initial control frame to any one of the first STAs.

It should be particularly noted that, when the AP MLD sends the initial control frame to any one of the first STAs, the AP MLD sends the initial control frame to the first STA via an affiliated AP that operates on the same communication link as the first STA and is associated with the first STA.

In some embodiments, the initial control frame can be an MU-RTS trigger frame or a BSRP trigger frame.

In some embodiments, after the Non-AP MLD receives the initial control frame sent by the AP MLD, data transmission can be performed between the Non-AP MLD and the AP MLD.

The communication method involved in the embodiments of the present disclosure may include at least one of the foregoing steps and the embodiments. For example, any one of steps S21 to S27 can be implemented as an independent embodiment, any combination of steps S21 to S24 can be implemented as an independent embodiment, any combination of steps S21 to S22 and steps S25 to S26 can be implemented as an independent embodiment, but is not limited thereto.

FIG. 4 is a first flow chart of a communication method according to an embodiment of the present disclosure. As shown in FIG. 4, the method is performed by a Non-AP MLD, and the method includes following steps.

S41: a first frame is determined, in which the first frame is used to indicate whether there is at least one second STA having in-device coexistence activities in first STAs.

In some embodiments, a first STA is affiliated with the Non-AP MLD and operates on an EMLSR link. That is, the first STA is an affiliated STA that operates on the EMLSR link among the affiliated STAs of the Non-AP MLD.

In some embodiments, a second STA is a STA that has in-device coexistence activities among the STAs affiliated with the Non-AP MLD and operating on the EMLSR link.

In some embodiments, the first frame can be an enhanced multi-link (EML) operating mode notification frame.

In some embodiments, the first frame includes a first information field, a first value in the first information field indicates that there is the at least one second STA in the first STAs, and a second value in the first information field indicates that there is no second STA in the first STAs.

The first value and the second value are different values. For example, the first value can be 1, and the second value can be 0, which is not limited herein.

In an embodiment, when the identification value of the first information field is 1, the first frame is used to indicate that there is the at least one second STA in the first STAs; when the identification value of the first information field is 0, the first frame is used to indicate that there is no second STA in the first STAs.

In some embodiments, the first information field can be an in-device coexistence activities field.

In some embodiments, the first frame includes an enhanced multi-link (EML) control field, and the enhanced multi-link control field includes the first information field.

In an embodiment, the first frame is an EML operating mode notification frame, the EML operating mode notification frame includes an EML control field, the EML control field includes an In-Device Coexistence Activities field; when the identification value of the in-device coexistence activities field is a first value, the first frame is used to indicate that there is the at least one second STA in the first STAs; when the identification value of the in-device coexistence activities field is a second value, the first frame is used to indicate that there is no second STA in the first STAs.

In some embodiments, in a case that there is the at least one second STA in the first STAs, the first frame further includes at least one second information field, and a second information field corresponds to a second STA.

Optionally, the second information field can be a per-link IDC activities field.

The second information field includes at least one of: a first sub-information field, in which the first sub-information field is used to indicate a link identifier of an EMLSR link on which the second STA operates; or at least one second sub-information field, a second sub-information field is used to indicate activity information of in-device coexistence activities present in the second STA.

In an embodiment, when the first frame is used to indicate that there is the at least one second STA in the first STAs, or a first value in the first information field of the first frame indicates that there is the at least one second STA in the first STAs, the first frame can further include at least one second information field.

Specifically, when the second information field includes a first sub-information field, the first sub-information field indicates a link identifier (ID), and the communication link corresponding to the link identifier is an EMLSR link on which a second STA operates.

The link identifier indicated by each first sub-information field in the second information field is different.

Optionally, the first sub-information field in the second information field can be a link ID field.

Specifically, when the second information field includes at least one second sub-information field, a second sub-information field is used to indicate activity information of in-device coexistence activities present in the second STA.

A second sub-information field in the second information field is used to indicate activity information of different in-device coexistence activities corresponding to the second STA.

Optionally, the second sub-information field in the second information field can be a per-IDC activities field.

In-device coexistence activities present in each second STA can be a communication activity of the second STA in a communication system.

In some embodiments, in a case that there is the at least one second STA in the first STAs and the second information field in the first frame includes at least one second sub-information field, the second sub-information field further includes at least one of: a first identifier field, in which the first identifier field is used to indicate an index of the in-device coexistence activities; a second identifier field, in which the second identifier field is used to indicate a start time of the in-device coexistence activities; or a third identifier field, in which the third identifier field is used to indicate a duration of the in-device coexistence activities.

The first identifier field is used to indicate an index of the in-device coexistence activities corresponding to the second sub-information field where the first identifier field is located, that is, used to identify the in-device coexistence activities corresponding to the second sub-information field where the first identifier field is located.

The first identifier field can be an IDC activity index field.

The second identifier field is used to indicate the activity start time of the in-device coexistence activities corresponding to the second sub-information field where the second identifier field is located.

The second identifier field can be an IDC activity start time field.

The third identifier field is used to indicate the activity duration of the in-device coexistence activities corresponding to the second sub-information field where the third identifier field is located.

The third identifier field can be an IDC activity duration field.

In some embodiments, in a case that there is the at least one second STA in the first STAs, the first frame includes a first element, for example, an EMLSR IDC activities element, and the EMLSR IDC activities element includes at least one second information field, and a second information field corresponds to a second STA.

In an embodiment, the first frame includes an EML control field, the EML Control field includes an in-device coexistence activities field (i.e., the first information field). When the identification value of the in-device coexistence activities field is 1, the first frame is used to indicate that there is the at least one second STA in the first STAs; when the identification value of the in-device coexistence activities field is a second value, the first frame is used to indicate that there is no second STA in the first STAs.

S42: the first frame is sent.

In some embodiments, after determining the first frame, the Non-AP MLD can send the first frame to the AP MLD via an EMLSR link.

FIG. 5 is a second flow chart of a communication method according to an embodiment of the present disclosure. As shown in FIG. 5, the method is performed by a Non-AP MLD, and the method includes following steps.

S51: a first frame is determined, in which the first frame is used to indicate whether there is at least one second STA having in-device coexistence activities in first STAs.

In some embodiments, for the implementation of step S51, reference can be made to the implementation shown in step S41 in FIG. 4, which will not be repeated here.

S52: the first frame is sent.

In some embodiments, for the implementation of step S52, reference can be made to the implementation shown in step S42 in FIG. 4, which will not be repeated here.

S53: a second frame sent by the AP MLD is received, in which the second frame is used to respond to the first frame.

In some embodiments, the second frame is sent by the AP MLD after receiving the first frame sent by the Non-AP MLD and in a case that the AP MLD is ready to communicate with the Non-AP MLD in the EMLSR state.

In some embodiments, the second frame can be an enhanced multi-link (EML) operating mode notification frame.

In some embodiments, the second frame may not include the second information fields.

The first information field in the second frame is a reserved bit. When the second frame sent by the AP MLD includes an enhanced multi-link (EML) control field, the in-device coexistence activities field in the EML control field is a reserved bit.

In some embodiments, in a case that there is the at least one second STA in the first STAs, the Non-AP MLD does not receive the second frame via any second STA that is in the in-device coexistence activities.

Optionally, in a case that there is the at least one second STA in the first STAs, the Non-AP MLD receives the second frame via a third STA outside a first time interval of the third STA.

The third STA is any one of the at least one second STA, and the first time interval of the third STA is an activity time of the in-device coexistence activities present in the third STA.

A first time interval of the third STA is determined by the start time of the in-device coexistence activities indicated by the second identifier field included in a second sub-information field in the second information field corresponding to the third STA in the first frame, and the duration of the in-device coexistence activities indicated by the third identifier field.

In an embodiment, the first frame includes the second information field corresponding to the third STA. The second information field corresponding to the third STA includes at least one second sub-information field, and the activity time of the in-device coexistence activities present in the third STA, that is, the first time interval of the third STA, can be determined via the second identifier field and the third identifier field in a second sub-information field.

Optionally, in a case that there is the at least one second STA in the first STAs, the Non-AP MLD can receive the second frame via a fourth STA.

The fourth STA is any STA in the first STAs other than the at least one second STA, that is, the fourth STA is any STA that does not have the in-device coexistence activities among the STAs affiliated with the Non-AP MLD and operating on the EMLSR link.

In a case that there is no second STA in the first STAs, the Non-AP MLD can receive the second frame via any one of the first STAs.

It should be particularly noted that, the second frame received by the Non-AP MLD via the third STA, the fourth STA, or any one of the first STAs (for convenience of description, the third STA, the fourth STA, or any one of the first STAs that needs to receive the second frame is hereinafter referred to as a target STA) is sent by the AP MLD via an affiliated AP that operates on the same communication link as the target STA and is associated with the target STA.

S54: an initial control frame is received, in which the initial control frame is used to indicate that data transmission is to be performed with the Non-AP MLD.

In some embodiments, the initial control frame is sent by the AP MLD when the AP MLD needs to perform data transmission with the Non-AP MLD.

The initial control frame is used to indicate that data transmission is to be performed with the Non-AP MLD.

In some embodiments, the initial control frame can be an MU-RTS trigger frame or a BSRP trigger frame.

In some embodiments, in a case that there is the at least one second STA in the first STAs, the Non-AP MLD does not receive the initial control frame via any second STA that is in the in-device coexistence activities.

Optionally, in a case that there is the at least one second STA in the first STAs, the Non-AP MLD receives the initial control frame via a third STA outside a first time interval of the third STA.

The third STA is any one of the at least one second STA, and the first time interval of the third STA is an activity time of the in-device coexistence activities present in the third STA.

A first time interval of the third STA is determined by the start time of the in-device coexistence activities indicated by the second identifier field included in a second sub-information field of the second information field corresponding to the third STA in the first frame, and the duration of the in-device coexistence activities indicated by the third identifier field.

In an embodiment, the first frame includes the second information field corresponding to the third STA. The second information field corresponding to the third STA includes at least one second sub-information field, and the activity time of the in-device coexistence activities present in the third STA, that is, the first time interval of the third STA, can be determined via the second identifier field and the third identifier field in each second sub-information field.

Optionally, in a case that there is the at least one second STA in the first STAs, the Non-AP MLD can receive the initial control frame via a fourth STA.

The fourth STA is any STA in the first STAs other than the at least one second STA, that is, the fourth STA is any STA that does not have the in-device coexistence activities among the STAs affiliated with the Non-AP MLD and operating on the EMLSR link.

In a case that there is no second STA in the first STAs, the Non-AP MLD can receive the initial control frame via any one of the first STAs.

It should be particularly noted that, the initial control frame received by the Non-AP MLD via the third STA, the fourth STA, or any one of the first STAs (for convenience of description, the third STA, the fourth STA, or any one of the first STAs that needs to receive the initial control frame is hereinafter referred to as a target STA) is sent by the AP MLD via an affiliated AP that operates on a same communication link as the target STA and is associated with the target STA.

In some embodiments, after receiving the initial control frame, the Non-AP MLD can perform data transmission with the AP MLD via the EMLSR link.

The communication method involved in the embodiments of the present disclosure can include at least one of the foregoing steps and the embodiments. For example, any one of steps S51 to S53 can be implemented as an independent embodiment, and steps S51 to S53 can be implemented as an independent embodiment, but is not limited thereto.

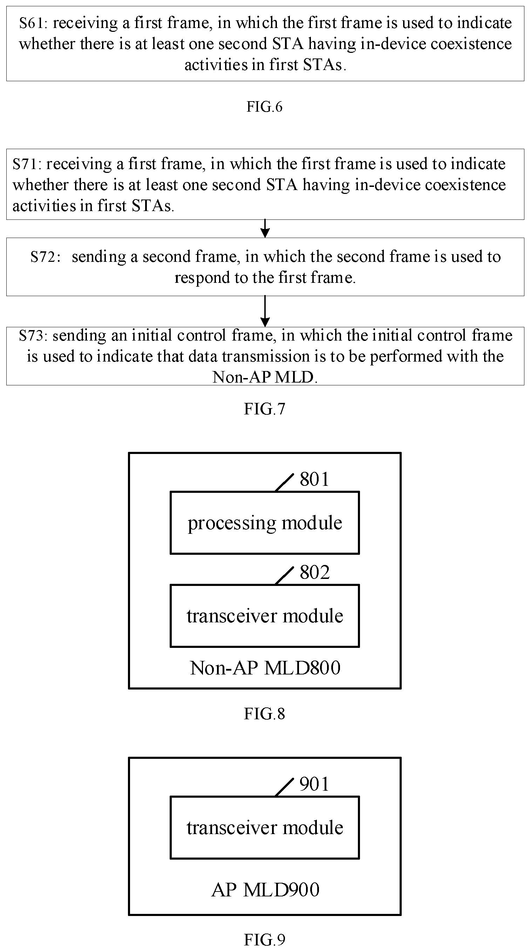

FIG. 6 is a third flow chart of a communication method according to an embodiment of the present disclosure. As shown in FIG. 6, the method is performed by an AP MLD, and the method includes following steps.

S61: a first frame is received, in which the first frame is used to indicate whether there is at least one second STA having in-device coexistence activities in first STAs.

In some embodiments, a first STA is affiliated with a Non-AP MLD and operates on an EMLSR link. That is, the first STA is an affiliated STA that operates on the EMLSR link among the affiliated STAs of the Non-AP MLD.

In some embodiments, a second STA is a STA that has in-device coexistence activities among the STAs affiliated with the Non-AP MLD and operating on the EMLSR link.

In some embodiments, the first frame can be an enhanced multi-link (EML) operating mode notification frame.

In some embodiments, the first frame includes a first information field, a first value in the first information field indicates that there is the at least one second STA in the first STAs, and a second value in the first information field indicates that there is no second STA in the first STAs.

The first value and the second value are different values. For example, the first value can be 1, and the second value can be 0, which is not limited herein.

In an embodiment, when the identification value of the first information field is 1, the first frame is used to indicate that there is the at least one second STA in the first STAs; when the identification value of the first information field is 0, the first frame is used to indicate that there is no second STA in the first STAs.

In some embodiments, the first information field can be an in-device coexistence activities field.

In some embodiments, the first frame includes an enhanced multi-link (EML) control field, and the enhanced multi-link control field includes the first information field.

In an embodiment, the first frame is an EML operating mode notification frame, the EML operating mode notification frame includes an EML control field, and the EML control field includes an in-device coexistence activities field. When the identification value of the in-device coexistence activities field is a first value, the first frame is used to indicate that there is the at least one second STA in the first STAs; when the identification value of the in-device coexistence activities field is a second value, the first frame is used to indicate that there is no second STA in the first STAs.

In some embodiments, in a case that there is the at least one second STA in the first STAs, the first frame further includes at least one second information field, and a second information field corresponds to a second STA.

Optionally, the second information field can be a per-link IDC activities field.

The second information field includes at least one of: a first sub-information field, in which the first sub-information field is used to indicate a link identifier of an EMLSR link on which the second STA operates; or at least one second sub-information field, a second sub-information field is used to indicate activity information of in-device coexistence activities present in the second STA.

In an embodiment, when the first frame is used to indicate that there is the at least one second STA in the first STAs, or a first value in the first information field of the first frame indicates that there is the at least one second STA in the first STAs, the first frame can further include at least one second information field.

Specifically, when the second information field includes a first sub-information field, the first sub-information field indicates a link ID, and the communication link corresponding to the link identifier is an EMLSR link on which a second STA operates.

The link identifier indicated by each first sub-information field in the second information field is different.

Optionally, the first sub-information field in the second information field can be a link ID field.

Specifically, when the second information field includes at least one second sub-information field, a second sub-information field is used to indicate activity information of in-device coexistence activities present in the second STA.

A second sub-information field in the second information field is used to indicate activity information of different in-device coexistence activities corresponding to the second STA.

Optionally, the second sub-information field in the second information field can be a per-IDC activities field.

In an embodiment, the second STAs present in the first STAs are STA1 and STA2, and the first frame includes a second information field corresponding to STA1 and a second information field corresponding to STA2.

The second information field corresponding to STA1 includes a first sub-information field and at least one second sub-information field. The first sub-information field in the second information field corresponding to STA1 is used to indicate the link identifier of the EMLSR link on which STA1 operates, and a second sub-information field in the second information field corresponding to STA1 is used to indicate activity information of in-device coexistence activities present in STA1. The first sub-information field in the second information field corresponding to STA2 is used to indicate the link identifier of the EMLSR link on which STA2 operates, and each second sub-information field in the second information field corresponding to STA2 is used to indicate activity information of in-device coexistence activities present in STA2.

In-device coexistence activities present in a second STA can be a communication activity of the second STA in a communication system.

In some embodiments, in a case that there is the at least one second STA in the first STAs and the second information field in the first frame includes at least one second sub-information field, the second sub-information field further includes at least one of: a first identifier field, in which the first identifier field is used to indicate an index of the in-device coexistence activities; a second identifier field, in which the second identifier field is used to indicate a start time of the in-device coexistence activities; a third identifier field, in which the third identifier field is used to indicate a duration of the in-device coexistence activities.

The first identifier field is used to indicate an index of the in-device coexistence activities corresponding to the second sub-information field where the first identifier field is located, that is, used to identify the in-device coexistence activities corresponding to the second sub-information field where the first identifier field is located.

The first identifier field can be an IDC activities index field.

The second identifier field is used to indicate the activity start time of the in-device coexistence activities corresponding to the second sub-information field where the second identifier field is located.

The second identifier field can be an IDC activity start time field.

The third identifier field is used to indicate the activity duration of the in-device coexistence activities corresponding to the second sub-information field where the third identifier field is located.

The third identifier field can be an IDC activity duration field.

In some embodiments, in a case that there is the at least one second STA in the first STAs, the first frame includes a first element, for example, an enhanced multi-link single radio in-device coexistence (EMLSR IDC) activities element, and the EMLSR IDC activities element includes at least one second information field, and a second information field corresponds to a second STA.

In an embodiment, the first frame includes an EML control field. The EML control field includes an in-device coexistence activities field (i.e., the first information field). When the identification value of the in-device coexistence activities field is 1, the first frame is used to indicate that there is the at least one second STA in the first STAs; when the identification value of the in-device coexistence activities field is a second value, the first frame is used to indicate that there is no second STA in the first STAs.

FIG. 7 is a fourth flow chart of a communication method according to an embodiment of the present disclosure. As shown in FIG. 7, the method is performed by an AP MLD, and the method includes following steps.

S71: a first frame is received, in which the first frame is used to indicate whether there is at least one second STA having in-device coexistence activities in first STAs.

In some embodiments, for the implementation of step S71, reference can be made to the implementation shown in step S61 in FIG. 6, which will not be repeated here.

S72: a second frame is sent, in which the second frame is used to respond to the first frame.

In some embodiments, after the AP MLD receives the second frame sent by the Non-AP MLD, in a case that the AP MLD is ready to communicate with the Non-AP MLD in the EMLSR state, the AP MLD can send the second frame to the Non-AP MLD to respond to the first frame.

In some embodiments, the second frame sent by the AP MLD can be an enhanced multi-link (EML) operating mode notification frame.

In some embodiments, the second frame sent by the AP MLD may not include the second information fields.

The first information field in the second frame is a reserved bit. When the second frame sent by the AP MLD includes an EML control field, the in-device coexistence activities field in the EML control field is a reserved bit.

In some embodiments, in a case that there is the at least one second STA in the first STAs, the AP MLD does not send the second frame to any second STA that is in the in-device coexistence activities.

Optionally, in a case that there is the at least one second STA in the first STAs, the AP MLD sends the second frame to a third STA outside a first time interval of the third STA.

The third STA is any one of the at least one second STA, and the first time interval of the third STA is an activity time of the in-device coexistence activities present in the third STA.

A first time interval of the third STA is determined by the start time of the in-device coexistence activities indicated by the second identifier field included in a second sub-information field in the second information field corresponding to the third STA in the first frame, and the duration of the in-device coexistence activities indicated by the third identifier field.

In an embodiment, the first frame includes the second information field corresponding to the third STA. The second information field corresponding to the third STA includes at least one second sub-information field, and the activity time of the in-device coexistence activities present in the third STA, that is, a first time interval of the third STA, can be determined via the second identifier field and the third identifier field in each second sub-information field.

In an embodiment, the second STAs present in the first STAs are STA3 and STA4. When the AP MLD sends the second frame to STA3, the AP MLD needs to send the second frame to STA3 outside the first time interval of STA3; when the AP MLD sends the second frame to STA4, the AP MLD needs to send the second frame to STA4 outside the first time interval of STA4.

Optionally, in a case that there is the at least one second STA in the first STAs, the AP MLD can send the second frame to a fourth STA.

The fourth STA is any STA in the first STAs other than the at least one second STA, that is, the fourth STA is any STA that does not have the in-device coexistence activities among the STAs affiliated with the Non-AP MLD and operating on the EMLSR link.

In an embodiment, the first STAs are STA5, STA6, and STA7, where STA5 and STA6 have the in-device coexistence activities, and STA7 does not have the in-device coexistence activities, and then the AP MLD can send the second frame to STA7 at any time.

In a case that there is no second STA in the first STAs, the AP MLD can send the second frame to any one of the first STAs.

It should be particularly noted that, when the AP MLD sends the second frame to the third STA, the fourth STA, or any one of the first STAs (for convenience of description, the third STA, the fourth STA, or any one of the first STAs that needs to receive the second frame is hereinafter referred to as a target STA), the AP MLD sends the second frame to the target STA via an affiliated AP that operates on the same communication link as the target STA and is associated with the target STA.

S73: an initial control frame is sent, in which the initial control frame is used to indicate that data transmission is to be performed with the Non-AP MLD.

In some embodiments, when the AP MLD needs to perform data transmission with the Non-AP MLD, the AP MLD can send the initial control frame to the Non-AP MLD.

The initial control frame is used to indicate that data transmission is to be performed with the Non-AP MLD.

Specifically, the manner in which the AP MLD sends the initial control frame is the same as the manner in which the AP MLD sends the second frame.

That is, in a case that there is the at least one second STA in the first STAs, the AP MLD does not send the initial control frame to any second STA that is in the in-device coexistence activities.

Optionally, in a case that there is the at least one second STA in the first STAs, the AP MLD sends the initial control frame to a third STA outside a first time interval of the third STA.

The third STA is any one of the at least one second STA, and the first time interval of the third STA is an activity time of the in-device coexistence activities present in the third STA.

A first time interval of the third STA is determined by the start time of the in-device coexistence activities indicated by the second identifier field included in a second sub-information field of the second information field corresponding to the third STA in the first frame, and the duration of the in-device coexistence activities indicated by the third identifier field.

In an embodiment, the first frame includes the second information field corresponding to the third STA. The second information field corresponding to the third STA includes at least one second sub-information field, and the activity time of the in-device coexistence activities present in the third STA, that is, the first time interval of the third STA, can be determined via the second identifier field and the third identifier field in each second sub-information field.

In an embodiment, the second STAs present in the first STAs are STA8 and STA9. When the AP MLD sends the initial control frame to STA8, the AP MLD needs to send the initial control frame to STA8 outside the first time interval of STA8; when the AP MLD sends the initial control frame to STA9, the AP MLD needs to send the initial control frame to STA9 outside the first time interval of STA9.

Optionally, in a case that there is the at least one second STA in the first STAs, the AP MLD can send the initial control frame to a fourth STA.

The fourth STA is any STA in the first STAs other than the at least one second STA, that is, the fourth STA is any STA that does not have the in-device coexistence activities among the STAs affiliated with the Non-AP MLD and operating on the EMLSR link.

In an embodiment, the first STAs are STA10, STA11, and STA12, where STA10 and STA11 have the in-device coexistence activities, and STA12 does not have the in-device coexistence activities, and then the AP MLD can send the initial control frame to STA12 at any time.

In a case that there is no second STA in the first STAs, the AP MLD can send the initial control frame to any one of the first STAs.

In some embodiments, the initial control frame can be an MU-RTS trigger frame or a BSRP trigger frame.

It should be particularly noted that, when the AP MLD sends the initial control frame to the third STA, the fourth STA, or any one of the first STAs (for convenience of description, the third STA, the fourth STA, or any one of the first STAs that needs to receive the second frame is hereinafter referred to as a target STA), the AP MLD sends the initial control frame to the target STA via an affiliated AP that operates on the same communication link as the target STA and is associated with the target STA.

In some embodiments, after sending the initial control frame, the AP MLD can perform data transmission with the Non-AP MLD via an EMLSR link.

The communication method involved in the embodiments of the present disclosure can include at least one of the foregoing steps and the embodiments. For example, any one of steps S71 to S73 can be implemented as an independent embodiment, and any combination of steps S71 to S73 can be implemented as an independent embodiment, but is not limited thereto.

FIG. 8 is a structural schematic diagram of a Non-AP MLD according to an embodiment of the present disclosure. As shown in FIG. 8, a Non-AP MLD 800 can include: a processing module 801 and a transceiver module 802.

In some embodiments, the processing module 801 is configured to determine a first frame, in which the first frame is used to indicate whether there is at least one second STA having in-device coexistence activities in first STAs, and a first STA is affiliated with a Non-AP MLD and operates on an EMLSR link; and the transceiver module 802 is configured to send the first frame.

Optionally, the processing module 801 is configured to perform at least one of the processing steps (for example, step S41, step S51, but not limited thereto) performed by the Non-AP MLD in any of the above methods, which will not be repeated here.

Optionally, the transceiver module 802 is configured to perform at least one of the transceiving steps (for example, step S21, step S42, steps S52 to S53, but not limited thereto) performed by the Non-AP MLD in any of the above methods, which will not be repeated here.

FIG. 9 is a structural schematic diagram of an AP MLD according to an embodiment of the present disclosure. As shown in FIG. 9, an AP MLD 900 can include: a transceiver module 901.

In some embodiments, the transceiver module 901 is configured to receive a first frame, in which the first frame is used to indicate whether there is at least one second STA having in-device coexistence activities in first STAs, and a first STA is affiliated with a Non-AP MLD and operates on an EMLSR link.

Optionally, the transceiver module 901 is configured to perform at least one of the transceiving steps (for example, step S23 to step S26, step S61, steps S71 to S73, but not limited thereto) performed by the AP MLD in any of the above methods, which will not be repeated here.

It should be understood that the division of the above units or modules is only a division of logical functions. In actual implementation, they can be fully or partially integrated into one physical entity, or can be physically separated. In addition, the units or modules can be implemented in a form of processor calling software: for example, comprising a processor, the processor is connected to a memory, instructions are stored in the memory, and the processor calls the instructions stored in the memory to implement any of the above methods or implement the functions of the above units or modules, in which the processor is, for example, a general-purpose processor, such as a central processing unit (CPU) or a microprocessor, and the memory is a memory inside or outside the device. Alternatively, the units or modules in the device can be implemented in the form of hardware circuits, and the functions of some or all of the units or modules can be implemented by designing the hardware circuits. The above hardware circuits can be understood as one or more processors. For example, in one implementation, the above hardware circuit is an application-specific integrated circuit (ASIC), and the functions of some or all of the above units or modules are implemented by designing the logical relationships of the elements in the circuit. For another example, in another implementation, the above hardware circuit can be implemented by a programmable logic device (PLD). Taking a field programmable gate array (FPGA) as an example, it can include a large number of logic gate circuits, and the connection relationships between the logic gate circuits are configured by a configuration file, thereby implementing the functions of some or all of the above units or modules. All units or modules of the above device can be entirely implemented by means of a processor calling software, or entirely implemented by means of hardware circuits, or partially implemented by means of a processor calling software, with the remaining part implemented by means of hardware circuits.

In the embodiments of the present disclosure, a processor is a circuit having signal processing capabilities. In one implementation, the processor can be a circuit having instruction reading and running capabilities, such as a central processing unit (CPU), a microprocessor, a graphics processing unit (GPU) (which can be understood as a microprocessor), or a digital signal processor (DSP), etc.; in another implementation, the processor can implement certain functions through the logical relationships of hardware circuits, where the logical relationships of the hardware circuits are fixed or reconfigurable. For example, the processor is a hardware circuit implemented by an application-specific integrated circuit (ASIC) or a programmable logic device (PLD), such as an FPGA. In a reconfigurable hardware circuit, the process of the processor loading a configuration file to implement the configuration of the hardware circuit can be understood as the process of the processor loading instructions to implement the functions of some or all of the above units or modules. In addition, it can also be a hardware circuit designed for artificial intelligence, which can be understood as an ASIC, such as a neural network processing unit (NPU), a tensor processing unit (TPU), a deep learning processing unit (DPU), etc.

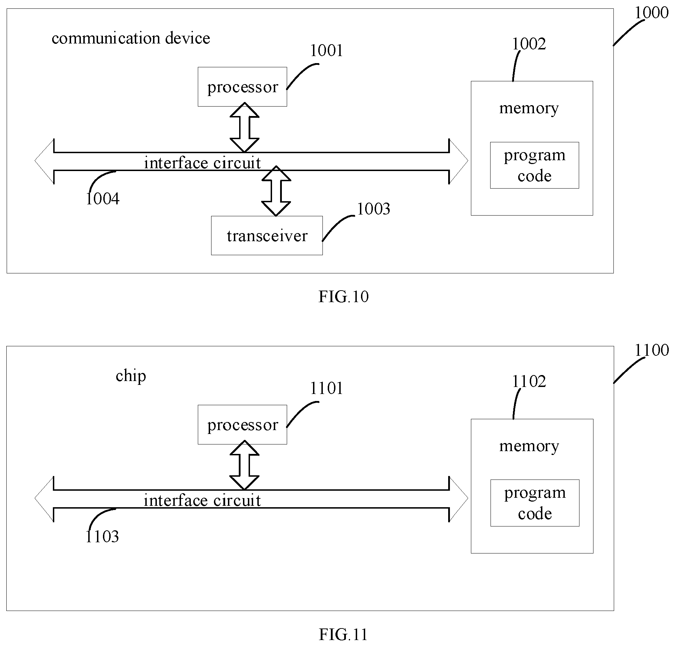

FIG. 10 is a structural schematic diagram of a communication device according to an embodiment of the present disclosure. A communication device 1000 can be a Non-AP MLD or an AP MLD, or can be a chip, a chip system, or a processor that supports the Non-AP MLD or the AP MLD to implement any of the above methods. The communication device can be used to implement the methods described in the above method embodiments, and for details, reference can be made to the description in the above method embodiments.

As shown in FIG. 10, the communication device 1000 includes a processor 1001. The processor 1001 can be a general-purpose processor or a dedicated processor, etc., for example, processor 1001 may be a baseband processor or a central processing unit. The baseband processor can be used to process communication protocols and communication data, and the central processing unit can be used to control a communication device (such as a base station, a baseband chip, a terminal device, a terminal device chip, a DU or a CU, etc.), execute programs, and process data of the programs. The communication device 1000 is configured to perform any of the above methods.

In some embodiments, the communication device 1000 further includes a memory 1002 for storing instructions. Optionally, all or part of the memory 1002 can also be outside the communication device 1000.

In some embodiments, the communication device 1000 further includes one or more transceivers 1003. When the communication device 1000 includesa transceiver 1003, the transceiver 1003 performs at least one of the communication steps such as sending and/or receiving (for example, step S21, step S23 to step S26, step S42, steps S52 to S53, step S61, step S71 to step S73, but not limited thereto) in the above methods, and the processor 1001 performs at least one of the other steps (for example, step S22, step S41, step S51, but not limited thereto).

In some embodiments, the transceiver can include a receiver and/or a transmitter, and the receiver and the transmitter can be separate or integrated together. Terms such as "transceiver", "transceiving unit", "transceiver machine", "transceiving circuit", etc. are synonymous and are used interchangeably; terms such as "transmitter", "sending unit", "sending machine", "sending circuit", etc. are synonymous and are used interchangeably, and terms such as "receiver", "receiving unit", "receiving machine", "receiving circuit", etc. are synonymous and are used interchangeably.

In some embodiments, the communication device 1000 can include one or more interface circuits 1004. Optionally, the interface circuit 1004 is connected to the memory 1002, and the interface circuit 1004 can be used to receive signals from the memory 1002 or other devices, and can be used to send signals to the memory 1002 or other devices. For example, the interface circuit 1004 can read instructions stored in the memory 1002 and send the instructions to the processor 1001.

The communication device 1000 in the description of the above embodiments can be a Non-AP MLD or an AP MLD, but the scope of the communication device 1000 described in the present disclosure is not limited thereto, and the structure of the communication device 1000 may not be limited by FIG. 10. The communication device can be an independent device or can be part of a larger device. For example, the above communication device can be: (1) an independent integrated circuit IC, or a chip, or a chip system or subsystem; (2) a set having one or more ICs, optionally, the above IC set can also include a storage component for storing data and programs; (3) an ASIC, such as a modem; (4) a module that can be embedded in other devices; (5) a receiver, a terminal device, an intelligent terminal device, a cellular phone, a wireless device, a handset, a mobile unit, a vehicle-mounted device, a network device, a cloud device, an artificial intelligence device, etc.; (6) others, etc.

FIG. 11 is a structural schematic diagram of a chip 1100 according to an embodiment of the present disclosure. The chip 1100 includes a processor 1101, and the chip 1100 is configured to perform any of the above methods.

In some embodiments, the chip 1100 further includes one or more interface circuits 1103. Optionally, the interface circuit 1103 is connected to a memory 1102, the interface circuit 1103 can be used to receive signals from the memory 1102 or other devices, and the interface circuit 1103 can be used to send signals to the memory 1102 or other devices. For example, the interface circuit 1103 can read instructions stored in the memory 1102 and send the instructions to the processor 1101.

In some embodiments, the interface circuit 1103 performs at least one of the communication steps such as sending and/or receiving (for example, step S21, step S23 to step S26, step S42, step S52 to step S53, step S61, steps S71 to S73, but not limited thereto) in the above methods, and the processor 1101 performs at least one of the other steps (for example, step S22, step S41, step S51, but not limited thereto).

In some embodiments, terms such as "interface circuit", "interface", "transceiver pin", "transceiver", etc. are synonymous and are used interchangeably.

In some embodiments, the chip 1100 further includes one or more memories 1102 for storing instructions. Optionally, all or part of the memory 1102 can be outside the chip 1100.

The present disclosure further provides a storage medium, the storage medium stores instructions, when the instructions are executed on the communication device 1000, the communication device 1000 is caused to perform any of the above methods. Optionally, the storage medium is an electronic storage medium. Optionally, the storage medium is a computer-readable storage medium, but is not limited thereto, and it can also be a storage medium readable by other devices. Optionally, the storage medium can be a non-transitory storage medium, but is not limited thereto, and it can also be a transitory storage medium.

The present disclosure further provides a program product, when the program product is executed by the communication device 1000, the communication device 1000 is caused to perform any of the above methods. Optionally, the program product is a computer program product.

The present disclosure further provides a computer program, when running on a computer, the computer is caused to perform any of the above methods. The above description includes embodiments of the present disclosure and the illustration of the applied technical principles. Those skilled in the art should understand that the scope of disclosure involved in the present disclosure is not limited to the technical solutions formed by the specific combination of the above technical features, but should also cover other technical solutions formed by any combination of the above technical features or their equivalent features without departing from the above disclosed concept. For example, technical solutions formed by replacing the above features with technical features having similar functions disclosed in the present disclosure (but not limited to).

## Claims

1. A communication method, comprising:
determining, by a non-access point multi-link device (Non-AP MLD) supporting multi-link, a first frame, wherein the first frame is used to indicate whether there is at least one second station device (STA) having in-device coexistence activities in first STAs, and a first STA is affiliated with the Non-AP MLD and operates on an enhanced multi-link single radio (EMLSR) link; and
sending, by the Non-AP MLD, the first frame.

2. The communication method according to claim 1, wherein the first frame comprises a first information field, a first value in the first information field indicates that there is the at least one second STA in the first STAs, and a second value in the first information field indicates that there is no second STA in the first STAs;
wherein the first frame comprises an enhanced multi-link control field, and the enhanced multi-link control field comprises the first information field.

3. The communication method according to claim 1 or 2, wherein in a case that there is the at least one second STA in the first STAs, the first frame further comprises at least one second information field, and a second information field corresponds to a second STA;
wherein the second information field comprises at least one of:
a first sub-information field, wherein the first sub-information field is used to indicate a link identifier of an EMLSR link on which the second STA operates; or
at least one second sub-information field, wherein a second sub-information field is used to indicate activity information of in-device coexistence activities present in the second STA.

4. The communication method according to claim 3, wherein the second sub-information field comprises at least one of:
a first identifier field, wherein the first identifier field is used to indicate an index of the in-device coexistence activities;
a second identifier field, wherein the second identifier field is used to indicate a start time of the in-device coexistence activities; or
a third identifier field, wherein the third identifier field is used to indicate a duration of the in-device coexistence activities.

5. The communication method according to claim 1, further comprising:
receiving, by the Non-AP MLD, a second frame, wherein the second frame is used to respond to the first frame.

6. The communication method according to claim 5, wherein,
in a case that there is the at least one second STA in the first STAs, the receiving, by the Non-AP MLD, the second frame comprises at least one of:
receiving, by the Non-AP MLD, the second frame via a third STA outside a first time interval of the third STA, wherein the third STA is any one of the at least one second STA, and the first time interval is an activity time of the in-device coexistence activities present in the third STA; and
receiving, by the Non-AP MLD, the second frame via a fourth STA, wherein the fourth STA is any STA in the first STAs other than the at least one second STA; and
in a case that there is no second STA in the first STAs, the receiving, by the Non-AP MLD, the second frame comprises:
receiving, by the Non-AP MLD, the second frame via any one of the first STAs.

7. The communication method according to claim 1, further comprising:
receiving, by the Non-AP MLD, an initial control frame, wherein the initial control frame is used to indicate that data transmission is to be performed with the Non-AP MLD.

8. The communication method according to claim 7, wherein,
in a case that there is the at least one second STA in the first STAs, the receiving, by the Non-AP MLD, the initial control frame comprises at least one of:
receiving, by the Non-AP MLD, the initial control frame via a third STA outside a first time interval of the third STA, wherein the third STA is any one of the at least one second STA, and the first time interval is an activity time of the in-device coexistence activities present in the third STA; and
receiving, by the Non-AP MLD, the initial control frame via a fourth STA, wherein the fourth STA is any STA in the first STAs other than the at least one second STAs; and
in a case that there is no second STA in the first STAs, the receiving, by the Non-AP MLD, the initial control frame comprises:
receiving, by the Non-AP MLD, the initial control frame via any one of the first STAs.

9. A communication method, comprising:
receiving, by an access point multi-link device (AP MLD) supporting multi-link, a first frame, wherein the first frame is used to indicate whether there is at least one second station device (STA) having in-device coexistence activities in first STAs, and a first STA is affiliated with a non-access point multi-link device (Non-AP MLD) and operates on an enhanced multi-link single radio (EMLSR) link.

10. The communication method according to claim 9, wherein the first frame comprises a first information field, a first value in the first information field indicates that there is the at least one second STA in the first STAs, and a second value in the first information field indicates that there is no second STA in the first STAs;
wherein the first frame comprises an enhanced multi-link control field, and the enhanced multi-link control field comprises the first information field.

11. The communication method according to claim 9 or 10, wherein in a case that there is the at least one second STA in the first STAs, the first frame further comprises at least one second information field, and a second information field corresponds to a second STA;
wherein the second information field comprises at least one of:
a first sub-information field, wherein the first sub-information field is used to indicate a link identifier of an EMLSR link on which the second STA operates; or
at least one second sub-information field, wherein a second sub-information field is used to indicate activity information of in-device coexistence activities present in the second STA.

12. The communication method according to claim 11, wherein the second sub-information field comprises at least one of:
a first identifier field, wherein the first identifier field is used to indicate an index of the in-device coexistence activities;
a second identifier field, wherein the second identifier field is used to indicate a start time of the in-device coexistence activities; or
a third identifier field, wherein the third identifier field is used to indicate a duration of the in-device coexistence activities.

13. The communication method according to claim 9, further comprising:
sending, by the AP MLD, a second frame, wherein the second frame is used to respond to the first frame.

14. The method according to claim 13, wherein,
in a case that there is the at least one second STA in the first STAs, the sending, by the AP MLD, the second frame comprises at least one of:
sending, by the AP MLD, the second frame to a third STA outside a first time interval of the third STA, wherein the third STA is any one of the at least one second STAs, and the first time interval is an activity time of the in-device coexistence activities present in the third STA; and
sending, by the AP MLD, the second frame to a fourth STA, wherein the fourth STA is any STA in the first STAs other than the at least one second STA; and
in a case that there is no second STA in the first STAs, the sending, by the AP MLD, the second frame comprises:
sending, by the AP MLD, the second frame to any one of the first STAs.

15. The communication method according to claim 9, further comprising:
sending, by the AP MLD, an initial control frame, wherein the initial control frame is used to indicate that data transmission is to be performed with the Non-AP MLD.

16. The communication method according to claim 15, wherein,
in a case that there is the at least one second STA in the first STAs, the sending, by the AP MLD, the initial control frame comprises at least one of:
sending, by the AP MLD, the initial control frame to a third STA outside a first time interval of the third STA, wherein the third STA is any one of the at least one second STAs, and the first time interval is an activity time of the in-device coexistence activities present in the third STA; and
sending, by the AP MLD, the initial control frame to a fourth STA, wherein the fourth STA is any STA in the first STAs other than the at least one second STAs; and
in a case that there is no second STA in the first STAs, the sending, by the AP MLD, the initial control frame comprises:
sending, by the AP MLD, the initial control frame to any one of the first STAs.

17. A non-access point multi-link device (Non-AP MLD), comprising:
a processing module, configured to determine a first frame, wherein the first frame is used to indicate whether a second AP needs a first AP to share a TXOP in a first TXOP and the second AP is a neighboring AP of the first AP; and
a transceiver module, configured to send the first frame so that the first AP shares the TXOP with at least one neighboring AP based on the first frame sent by the neighboring AP or the first AP does not share the TXOP with any neighboring AP.

18. An access point multi-link device (AP MLD), comprising:
a transceiver module, configured to receive a first frame, wherein the first frame is used to indicate whether there is at least one second station device (STA) having in-device coexistence activities in first STAs, and a first STA is affiliated with a non-access point multi-link device (Non-AP MLD) and operates on an enhanced multi-link single radio (EMLSR) link.

19. A communication device, comprising:
one or more processors,
wherein the communication device is configured to perform the communication method according to any one of claims 1 to 8 or any one of claims 9 to 16.

20. A storage medium, storing instructions, when executed on a communication device, the communication device is caused to perform the method according to any one of claims 1 to 8 or any one of claims 9 to 16.
